# EUROPEAN PATENT SPECIFICATION

(11) **EP 3 832 367 B1**
(45) Date of publication and mention of the grant of the patent: **29.01.2025**
(21) Application number: 19840170.5
(22) Date of filing: 01.07.2019
(51) Int. Cl.: G02B 7/02, G02B 1/111, G02B 1/18, G02B 5/22, G03B 11/00, G03B 15/00

(54) **CONNECTION METHOD, LENS, HOLDING MECHANISM, CAMERA DEVICE, AND MOVING BODY**
VERBINDUNGSVERFAHREN, LINSE, HALTEMECHANISMUS, KAMERAVORRICHTUNG UND BEWEGLICHER KÖRPER
PROCÉDÉ DE COUPLAGE, LENTILLE, MÉCANISME DE MAINTIEN, DISPOSITIF DE CAMÉRA ET CORPS MOBILE

(30) Priority: 27.07.2018 JP 2018141811
(43) Date of publication of application: 09.06.2021
(73) Proprietor: Kyocera Corporation, Kyoto-shi, Kyoto 612-8501 (JP)
(72) Inventor: OKADA Takahiro, Kyoto-shi, Kyoto 612-8501 (JP); KEYAKI Ryohta, Kyoto-shi, Kyoto 612-8501 (JP)
(74) Representative: Viering, Jentschura & Partner mbB Patent- und Rechtsanwälte
(86) International application number: PCT/JP2019/026156
(87) International publication number: WO 2020/021983

(56) References cited:
- JP-A- 2003 161 806
- JP-A- 2003 294 903
- JP-A- 2012 185 240
- JP-A- 2012 226 202
- JP-A- 2016 020 951

## Description

### CROSS-REFERENCE TO RELATED APPLICATION

The present application claims priority to and the benefit of Japanese Patent Application No. 2018-141811 filed on July 27, 2018.

### TECHNICAL FIELD

The present disclosure relates to a method of bonding, a lens, an optical assembly, a camera device and a moving body.

### BACKGROUND

In a vehicle-mounted camera device, and the like, optical members such as a lens and an infrared cut filter are fixed to a holder that holds the optical members. An adhesive may be used to bond an optical member and a holder to each other (see, for example, Patent Literature 1 (PTL1) and Patent Literature 2 (PTL 2)). Further, unused areas of the optical member that are not used optically may be black painted with antireflection paint (see, for example, Patent Literature 3 (PTL3)).
JP 2016 020951 A discloses a lens barrel comprising: a first lens; and a lens frame which holds the first lens. The lens frame comprises: a barrel plate which contacts with the first lens to regulate the position of the first lens in a thrust direction; and a through hole which is arranged from outside of the lens frame to the barrel plate to apply an adhesive agent. Ultraviolet rays are applied from an ultraviolet irradiation device to the adhesive agent to harden.
JP 2012 185240 A discloses a lens array that has a plurality of lens parts, and a substrate part by which the plurality of the lens parts are integrally connected to each other. This lens array includes: a groove formed in an area excluding a portion intersecting with an optical axis of the lens part; a light-shielding material filled into the groove; and a stepped bank formed in the boundary between the lens surface of the lens part and the groove.
JP 2012 226202 A discloses a method for manufacturing the lens unit can inexpensively mass-produce a lens unit having excellent optical characteristics, because an adhesive injected between two lens array plates is developed between surfaces having a space Δ2 using a capillary phenomenon, but is not developed between optical surfaces having a space Δ1 larger than the space Δ2.

### CITATION LIST

### Patent Literature

PTL 1: JP2011-099900 (A)
PTL 2: JP2006-157420 (A)
PTL 3: JP2009-229542 (A)

### SUMMARY

According to the present disclosure, a method of bonding according to claim 1, an optical assembly according to claim 3, a camera device according to claim 4, and a moving body according to claim 5 are provided. A further embodiment is defined in dependent claim 2.

### BRIEF DESCRIPTION OF THE DRAWINGS

In the accompanying drawings:
FIG. 1A is a schematic configuration diagram of a camera device according to an embodiment;
FIG. 1B is an enlarged view of a portion surrounded by the dashed-dotted line in FIG. 1A;
FIG. 2 is a view of a lens 11 in FIG. 1, viewed from an image side;
FIG. 3 is a flowchart illustrating a method of bonding according to a first embodiment;
FIG. 4 is a perspective view illustrating a schematic configuration of a holding mechanism according to a second embodiment;
FIG. 5 is A-A cross-sectional view of the holding mechanism illustrated in FIG. 4;
FIG. 6 is a flowchart illustrating a method of bonding according to the second embodiment;
FIG. 7 is a diagram illustrating a method of bonding a holder and an optical member to each other according to a third embodiment;
FIG. 8 is a diagram illustrating bonding between the holder and the optical member according to a conventional method of bonding;
FIG. 9 is a flowchart illustrating a method of bonding according to the third embodiment;
FIG. 10 is a cross-sectional view illustrating a schematic configuration of a camera device including a lens according to a fourth embodiment;
FIG. 11 is a cross-sectional view of the lens according to the fourth embodiment;
FIG. 12 is a flowchart illustrating a method of bonding according to the fourth embodiment;
FIG. 13 is a diagram illustrating an example of a mounting position of the camera device on the vehicle:
FIG. 14 is a diagram illustrating a contact angle; and
FIG. 15 is a diagram illustrating a sliding angle.

### DETAILED DESCRIPTION

Adhesion and black painted treatment to an optical member such as a lens and an infrared cut filter preferably have high adhesion and are hard to peel off. Further, it is not easy to dispose a liquid material such as an adhesive and an antireflection paint on an optical member in a desired shape. Such liquid materials may move before they solidify and protrude from their intended position. If a groove is provided in the optical member or the holder to allow the liquid to escape, the shape of the optical member or the holder will be complicated. Further, liquid materials applied to undesired areas may come off after their solidification. If an adhesive or an antireflection paint pee peels off inside a housing of the camera device, the performance of the optical system of the camera device may be deteriorated.

A method of bonding, a lens, an optical assembly, a camera device and a moving body according to the present disclosure change the contact characteristics of a surface of at least one of an optical member and a holder at least partially. The contact characteristics include wettability and slipperiness. Thus, the above described various problems regarding bonding between the holder and the optical member in the camera device can be improved.

Before describing an embodiment of the present disclosure, the wettability and the slipperiness, which are the premise of the present disclosure, will be described.

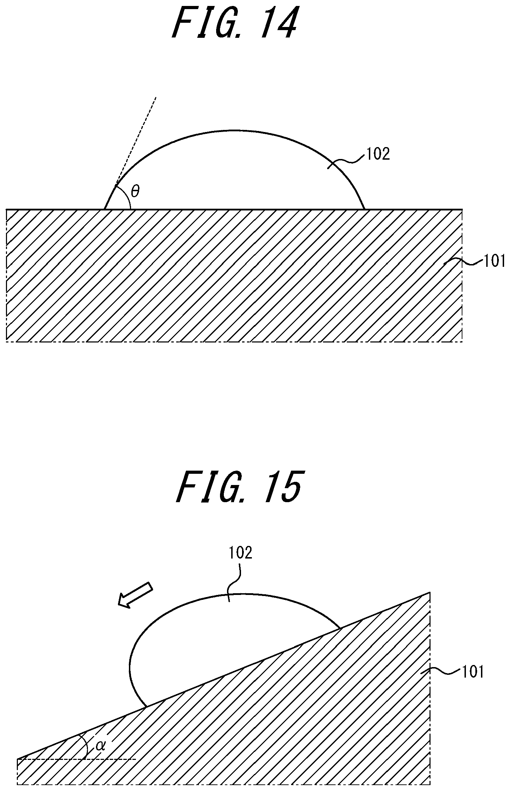

Wettability represents the affinity between a solid surface and a liquid. When the liquid is water, the wettability is also referred to as hydrophilic or hydrophobic. The wettability is generally evaluated using a contact angle θ as an index. As illustrated in FIG. 14, the contact angle θ is an angle formed by the surface of a droplet 102 and the surface of a solid 101 when the droplet 102 is disposed on the surface of the solid 101. It is said that the smaller the contact angle θ, the better the wettability, and the larger the contact angle θ, the poorer the wettability. If the wettability is good, the droplet 102 spreads widely on the surface of the solid 101. In general, when the contact angle θ is smaller than 90 degrees, the wettability is considered to be good, and when the contact angle θ is greater than 90 degrees, the wettability is considered to be poor. In the present disclosure, the contact angle θ is measured by a measuring machine typified by a dynamic contact angle measuring machine manufactured by First Ten Angstroms Inc. under the condition of dropping 5 µl of liquid onto a solid surface.

Slipperiness represents the removal performance of the droplet 102 on the surface of the solid 101. As illustrated in FIG. 15, when the droplet 102 is attached onto the horizontal surface of the solid 101 and the surface of the solid 101 is gradually tilted, the droplet 102 starts sliding downward at a certain tilt angle. The tilt angle at this time is referred to as a sliding angle α. In general, the slipperiness is evaluated using the sliding angle α as an index. When evaluating the removal performance of the droplet 102 using the sliding angle α, it is necessary to set predetermined conditions for the amount of liquid. In the present disclosure, the sliding angle is measured by a measuring machine typified by a dynamic contact angle measuring machine made by First Ten Angstroms Inc. under the condition of dropping 5 to 20 µl of liquid on the solid surface.

An embodiment of the present disclosure will be described with reference to the drawings below. The drawings used in the following description are schematic. The dimensional ratios on the drawings do not always match the actual ones.

### [First Embodiment]

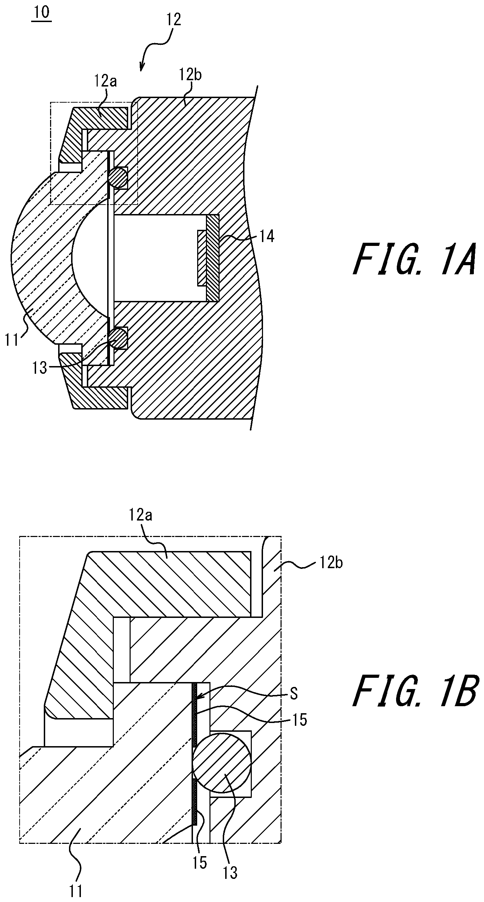

The holding mechanism of a camera device 10 will be described with reference to FIGS. 1A and 1B. As illustrated in FIG. 1A, the camera device 10 includes a lens 11, a holder 12, an O-ring 13 and an imaging circuit 14. The area surrounded by the dashed-dotted line illustrated in FIG. 1A is enlarged and displayed in FIG. 1B. The holding mechanism can be rephrased as an optical assembly or can be included in an optical assembly of the camera device 10.

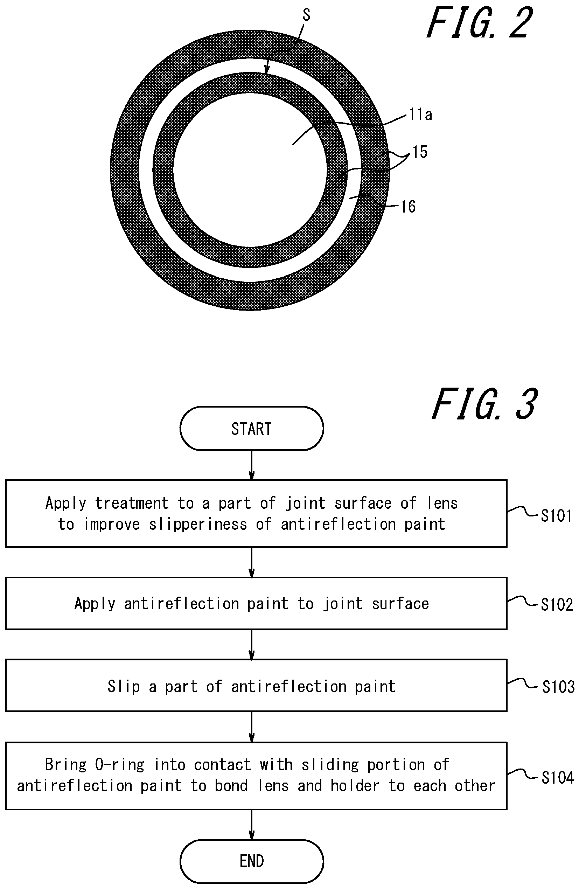

The lens 11 is an optical member configured to form an object image on an image sensor of an imaging circuit 14. The lens 11 is not limited to one lens, and may be composed of a plurality of lenses. FIG. 2 is a view of the lens 11 viewed from the image sensor side. Hereinafter the image sensor side is appropriately referred to as an "image side." The central portion of the lens 11 is an optical use area 11a through which light rays involved in imaging pass. The outer periphery of the lens 11, which is not included in the optical use area 11a, is an unused area through which light lays involved in imaging do not pass.

The image side of the outer periphery of the lens 11 is a flat joint surface S. A black antireflection paint 15 is applied to the joint surface S so as to circle the optical use area 11a. The antireflection paint 15 is applied to reduce phenomena such as ghost or flare caused when the unnecessary light incident from the lens 11 is reflected inside the camera device 10.

Moreover, on a part of this joint surface S, a narrow annular sliding treatment area 16, to which the antireflection paint 15 is not applied, is formed, in the area where the antireflection paint 15 is applied, so as to circle the optical use area 11a. The sliding treatment area 16 is a surface-treated area in which the sliding angle of the antireflection paint in a liquid state before solidifying to the lens 11 is less than 10 degrees.

In the present application, the surface treatment includes surface coating and surface modification. The surface treatment can be applied onto a coating such as an existing antireflection film. In the present application, the state in which the surface treatment is applied includes having a coating layer on the surface and having a surface modification layer. These layers may also be referred to as surface treatment layers. It is known that, when the solid surface has a structure of a predetermined shape, the slipperiness of the solid surface increases. Thus, as a treatment of adjusting the sliding angle with the antireflection paint, surface modification can be applied to the surface of the lens 11 to form a structure of a predetermined shape.

Instead of the sliding treatment area 16, the joint surface S may be subjected to surface treatment that reduces wettability in which the contact angle of the antireflection paint in a liquid state before solidification exceeds a predetermined value. The surface treatment that reduces wettability includes coating the surface with a material with poor wettability. As a material with poor wettability with respect to water or the like, a fluorine compound with a trifluoromethyl group, a silicone resin in which a hydrophobic methyl group is oriented, or the like can be used. Furthermore, when the solid surface has a fine uneven structure, it is known that the surface with good wettability will have better wettability. Further, it is known that the surface with poor wettability will have poorer wettability. Thus, surface modification that produces a fine uneven structure is applied to a material with poor wettability so as to form a surface with a particularly poor wettability having a contact angle of more than 105 degrees. As a method of generating a fine uneven structure, a method of forming a fractal structure surface by self-organization, a method by laser ablation, a method by microwave plasma CVD method, a method by etching with use of a corrosive fluid, etc. are known.

The holder 12 is a member that holds the lens 11. The holder 12 includes, for example, a lens holding ring 12a and a lens barrel 12b. The lens holding ring 12a can be screwed to the lens barrel 12b. The lens 11 can be held with its outer periphery sandwiched between the lens holding ring 12a and the lens barrel 12b. At that time, the O-ring 13 is disposed between the joint surface S of the lens 11 and the lens barrel 12b. A groove that receives the O-ring 13 is formed, for example, in the surface of the lens barrel 12b facing the joint surface S. In this manner, the O-ring 13 is positioned. The inner part of the lens barrel 12b along the optical axis of the lens 11 is hollow and can house the imaging circuit 14. Other optical elements such as an infrared cut filter and a diaphragm may be disposed between the lens 11 and the imaging circuit 14.

The O-ring 13 is disposed between the joint surface S of the lens 11 and the lens barrel 12b so as to circle the outside of the optical path of an image captured by the camera device 10. The O-ring 13 is provided to seal the space in the lens barrel 12b in which the imaging circuit 14 is housed. The O-ring 13 comes in contact with the sliding treatment area 16 of the lens 11 to which the antireflection paint 15 is not applied. As a result, the lens 11 and the O-ring 13 are closely attached to each other, and the waterproof property in the lens barrel 12b is improved. If the antireflection paint 15 is applied to the surface of the lens 11 with which the O-ring 13 comes in contact, the adhesion between the lens 11 and the O-ring 13 will be reduced when the antireflection paint 15 peels off during manufacture or due to change over time. Thus the waterproof property may not be ensured.

The width of the O-ring 13 in contact with the joint surface S of the lens 11 when the lens 11 and the holder 12 are bonded to each other can be set to be substantially the same as the width of the annular sliding treatment area 16. Here, substantially the same width means a width in which an error is less than 25% with respect to the width of the sliding treatment area 16. When the O-ring 13 is black, high adhesion can be obtained between the O-ring 13 and the lens 11 by making the sliding treatment area 16 and the width of the O-ring 13 in contact with the joint surface S substantially the same. Moreover, since the entire joint surface S is covered with a black area that does not transmit light, the same effect of reducing ghosts and flares as when the entire joint surface S is black painted can be obtained.

The imaging circuit 14 includes an image sensor. The image sensor has a plurality of pixels arranged in two dimensions. The image sensor may include, for example, a CCD (Charge Coupled Device) image sensor or a CMOS (Complementary Metal Oxide Semiconductor) image sensor. The imaging circuit 14 converts an object image formed by the image sensor into an electric signal to generate an image, and outputs the image to outside the camera device 10.

Next, a method of bonding the lens 11 to the holder 12 according to the first embodiment will be described with reference to FIG. 3.

First, on the joint surface S of the lens 11 before the antireflection paint 15 is applied, surface treatment that enhances the slipperiness of the antireflection paint 15 is applied to the annular area corresponding to the position and the thickness of the O-ring 13 (step S101). The area where this surface treatment is applied is referred to as the sliding treatment area 16. The sliding angle of the antireflection paint 15 in a liquid state in the sliding treatment area 16 is less than 10 degrees.

Next, the antireflection paint 15 in a liquid state is applied to the joint surface S (step S102). As the antireflection paint 15, various commercially available black paints for optics can be used. After the antireflection paint 15 is applied, the joint surface S is tilted from the horizontal direction to slide the antireflection paint 15 in a liquid state located on the sliding treatment area 16 (step S103). Therefore, the antireflection paint 15 dries and solidifies on the joint surface S other than the sliding treatment area 16.

After the antireflection paint 15 solidifies, the lens holding ring 12a is fitted into the lens barrel 12b with the O-ring 13 in contact with the sliding treatment area 16 onto which the antireflection paint 15 is not applied, and the lens 11 and the holder 12 are bonded to each other (step S104).

As described above, according to this embodiment, when the lens 11 and the holder 12 are bonded to each other, the O-ring 13 comes in contact with the joint surface S of the lens 11 without coming in contact with the antireflection paint 15, and thus a high sealing property can be achieved in the space in the lens barrel 12b. Further, the risk that the antireflection paint 15 peels off inside the housing of the camera device 10 and the performance of the optical system of the camera device 10 is degraded can be reduced.

### [Second Embodiment]

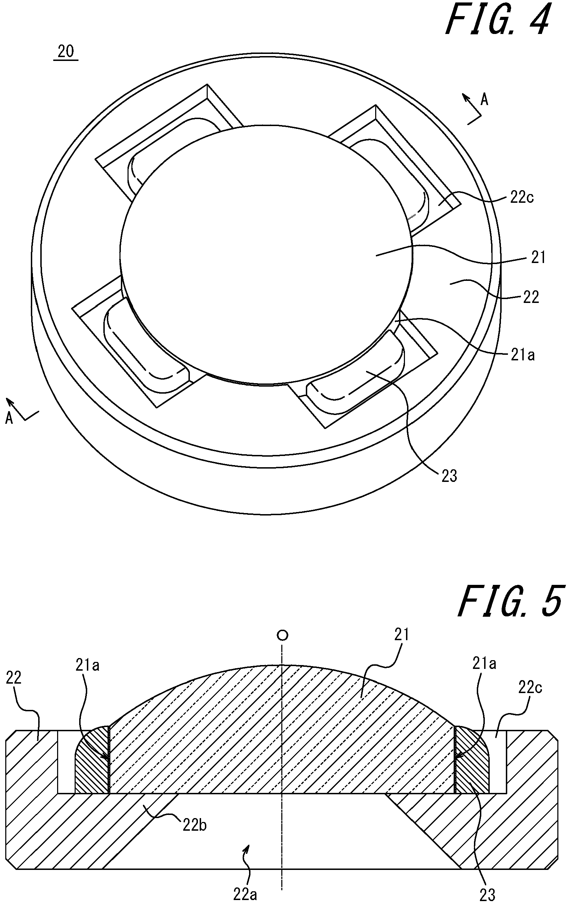

A holding mechanism 20 according to a second embodiment of the present disclosure will be described with reference to FIG. 4. The holding mechanism 20 includes a lens 21, which is an optical member, a holder 22, and an adhesive 23 that bonds the lens 21 and the holder 22 to each other.

The lens 21 can have various shapes. The lens 21 is, for example, a plano-convex lens that is convex toward the object as illustrated in FIG. 5. The convex surface and the flat surface of the lens 21 are separated by a predetermined distance in terms of outer periphery. The outer peripheral side 21a between the convex surface and the flat surface of the lens 21 is a cylindrical surface. The outer peripheral side 21a of the lens 21 is treated with a surface treatment that improves wettability in which the contact angle with the liquid adhesive 23 before solidification is smaller than the contact angle between the base material of the lens 21 and the liquid adhesive 23 before solidification. In other words, the outer peripheral side 21a of the lens 21 has better wettability to the adhesive 23 than the base material of the lens 21. The base material of the lens means a material of the lens. The base material of the lens includes glass and resin.

The holder 22 has a circular ring shape with a hollow center 22a centered on the optical axis O of the lens 21. The holder 22 is also provided with a circular stepped portion 22b that receives the lens 21 in the center, when viewed in the direction along the optical axis O. Furthermore, the holder 22 is provided with four adhesive recesses 22c toward the outside in the radial direction at positions displaced by 90 degrees in the circumferential direction of the circular step portion 22b. In each recess for adhesion 22c, the outer peripheral side 21a of the lens 21 is in contact with the adhesive 23. It is to be noted that the number and the arrangement of the recesses for adhesion 22c are examples, and are not limited to the above example.

Each adhesive 23 is in contact with the outer peripheral side 21a of the lens 21 and the holder 22 in each of the four recesses for adhesion 22c. In this manner, the lens 21 is fixed to the holder 22.

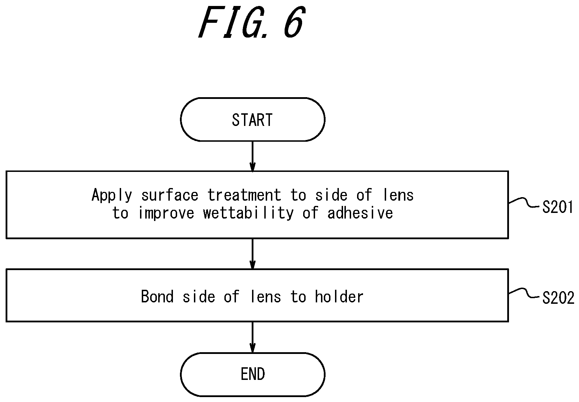

Next, a method of bonding the lens 21 to the holder 22 according to the second embodiment will be described with reference to FIG. 6.

First, the outer peripheral side 21a of the lens 21 is subjected to surface treatment that improves the wettability of the adhesive 23 (step S201). The side surface subjected to surface treatment to improve the wettability can be the entire outer peripheral side 21a of the lens 21 or only the part to which the adhesive 23 is applied. This surface treatment makes the contact angle between the adhesive 23 in a liquid state and the surface-treated outer peripheral side 21a smaller than the contact angle between the adhesive 23 in a liquid state and the base material of the lens 21. The contact angle between the adhesive 23 in a liquid state and the surface-treated outer peripheral side 21a may be less than 5 degrees.

The surface treatment that improves the wettability includes coating the surface with a material with good wettability. As a material with good wettability to water or the like, a titanium oxide film coating agent, a silicone resin in which a silanol group is oriented, or the like can be used. Furthermore, as described above, it is known that, when a solid surface has a fine uneven structure, a surface having good wettability has better wettability, and a surface having poor wettability has poorer wettability. Therefore, a surface having particularly good wettability with a contact angle of less than 5 degrees can be formed by applying surface modification that produces a fine uneven structure to the material having good wettability. In this embodiment, it is particularly advantageous that the surface treatment is surface modification.

Next, the lens 21 is received in the recess of the holder 22, the four recesses for adhesion 22c are filled with the adhesive 23, and the outer peripheral side 21a of the lens 21 and the holder 22 are bonded to each other (step S202). Since the outer peripheral side 21a of the lens 21 is surface-treated to improve the wettability to the adhesive 23, it has high adhesion to the adhesive 23. Therefore, the lens 21 and the holder 22 are firmly bonded to each other.

As described above, according to this embodiment, since the outer peripheral side 21a of the lens 21 is surface-treated to improve the wettability to the adhesive 23, the lens 21 and the holder 22 are firmly bonded to each other via the adhesive 23. As a result, the bonding strength between the lens 21 and the holder 22 is improved, and they are less likely to peel off.

### [Third Embodiment]

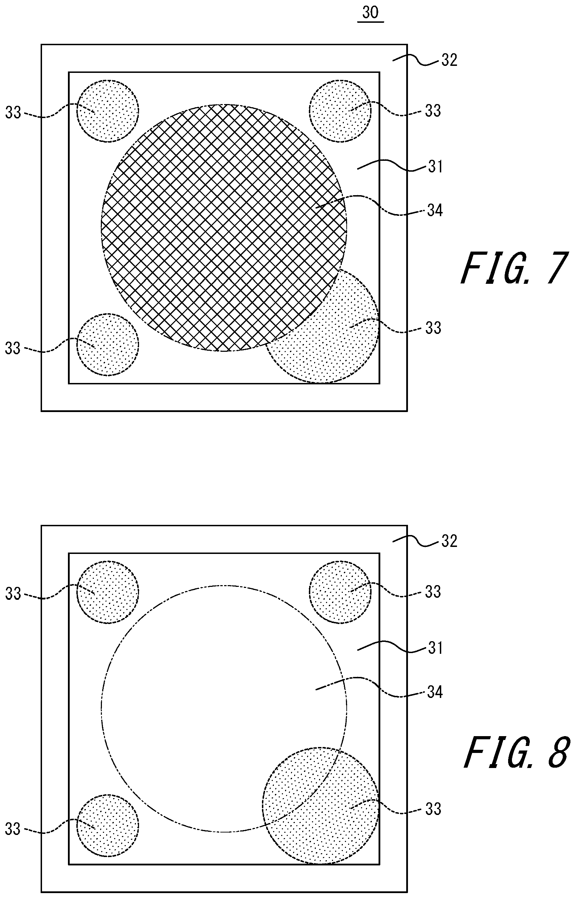

A holding mechanism 30 according to a third embodiment will be described with reference to FIG. 7. FIG. 7 is the holding mechanism 30 disposed inside the camera device as viewed from the direction along the optical axis of the camera device. The holding mechanism 30 includes an infrared cut filter 31 (optical member), a holder 32 and an adhesive 33. In the holding mechanism 30, the infrared cut filter 31 is held by the holder 32 in the camera device.

The infrared cut filter 31 does not transmit infrared rays and transmits visible light. The infrared cut filter 31 may include a dielectric multilayer film formed on a glass substrate. Inside the camera device, the infrared cut filter 31 is disposed in front of the lens side of the image sensor.

The holder 32 is a member that holds the infrared cut filter 31 to the housing of the camera device. The holder 32 may be attached to the housing of the camera device. The holder 32 may have a plate-like portion having a circular opening through which light rays from the object pass. In the example illustrated in FIG. 7, the holder 32 is illustrated as a square plate member.

The adhesive 33 bonds the infrared cut filter 31 and the holder 32 to each other. The adhesive 33 may be disposed near the four corners of the square holder 32. At the time of bonding, the adhesive 33 in a liquid state is applied to the vicinity of the four corners of the infrared cut filter 31. The adhesive 33 in a liquid state spreads by bringing the infrared cut filter 31 and the holder 32 into close contact with each other.

The portion that overlaps the circular opening of the holder 32 when the infrared cut filter 31 is bonded to the holder 32 is referred to as the optical use area 34 of the infrared cut filter 31. Before the infrared cut filter 31 is bonded to the holder 32, the optical use area 34 is surface treated to reduce the wettability to the adhesive 33 in a liquid state before solidification. That is, the wettability of the optical use area 34 with respect to the adhesive 33 in a liquid state is worse than that of other areas of the infrared cut filter 31 with respect to the adhesive 33 in a liquid state. Therefore, the adhesive 33 in a liquid state is repelled with respect to the optical use area 34 and does not protrude into the optical use area 34. As a result, after bonding, the adhesive 33 does not protrude into the optical use area 34.

FIG. 8 illustrates, for comparison, an example in which the optical use area 34 of the infrared cut filter 31 is not subjected to surface treatment that reduces the wettability. In this case, a part of the adhesive 33 (for example, the lower right part in FIG. 8) may protrude into the optical use area 34 of the infrared cut filter 31. If the adhesive 33 protrudes into the optical use area 34, the adhesive 33 may appear in the image of the camera device. Thus, the holding mechanism 30 in which the adhesive 33 protrudes into the optical use area 34 can be defective.

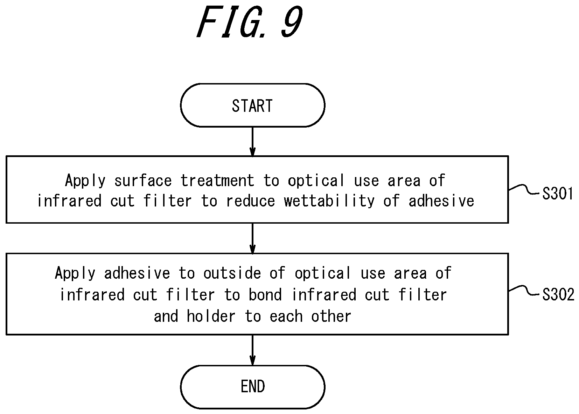

Next, a method of bonding the infrared cut filter 31 to the holder 32 according to the third embodiment will be described with reference to FIG. 9.

First, a surface treatment that reduces the wettability of the adhesive 33 in a liquid state is applied to the optical use area 34 of the infrared cut filter 31 (step S301). It is preferable that the surface treatment that reduces the wettability has almost no effect on the transmission of visible light. The surface treatment that reduces the wettability makes the contact angle between the adhesive 33 in a liquid state and the surface-treated optical use area 34 larger than the contact angle between the adhesive 33 in a liquid state and the base material of the infrared cut filter 31. For example, the contact angle between the adhesive 33 in a liquid state and the surface-treated optical use area 34 can be an angle exceeding 105 degrees.

Next, the adhesive 33 is applied to the four corners outside the optical use area 34 of the infrared cut filter 31, and the infrared cut filter 31 and the holder 32 are bonded to each other (step S302). The adhesive 33 spreads between the infrared cut filter 31 and the holder 32. However, the spread of this adhesive 33 is regulated by the surface-treated part of the infrared cut filter 31, and solidifies without spreading to the optical use area 34.

As described above, in the holding mechanism 30 according to this embodiment illustrated in FIG. 7, since the adhesive 33 does not protrude into the optical use area 34, a good image can be captured when adopted to a camera device. Further, it is not necessary to provide the optical member or the holder with a complicated shape such as a groove shape for allowing liquid to escape to prevent the adhesive 33 from protruding. Thus the holding mechanism 30 can be formed easily.

### [Fourth Embodiment]

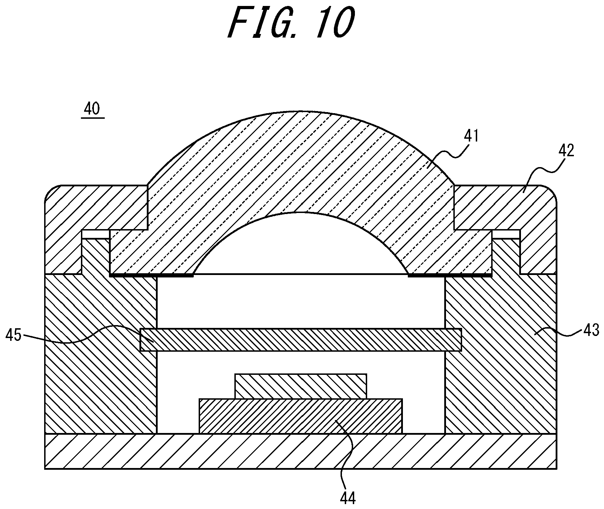

A schematic configuration of a camera device 40 including a lens provided with a holding mechanism according to a fourth embodiment will be described with reference to FIG. 10. The camera device 40 includes a lens 41, which is an optical member, a lens holding ring 42, a lens barrel 43, an imaging circuit 44 and an infrared cut filter 45.

The lens 41 forms an image of the object on the image sensor included in the imaging circuit 44. The lens holding ring 42 and the lens barrel 43 serve as a holder that holds the lens 41. That is, the lens 41, the lens holding ring 42 and the lens barrel 43 constitute a holding mechanism. The holder that holds the lens 41 is not limited to one that includes the lens holding ring 42 and the lens barrel 43, but can be configured in various manners. For example, the lens 41 can be held in a single lens barrel without providing the lens holding ring 42. The imaging circuit 44 including an image sensor and the infrared cut filter 45 are housed in the lens barrel 43. The imaging circuit 44 acquires, by an image sensor, an object image by a visible light whose wavelength in the infrared area is cut by the infrared cut filter 45, converts it into an electric signal and outputs to the outside.

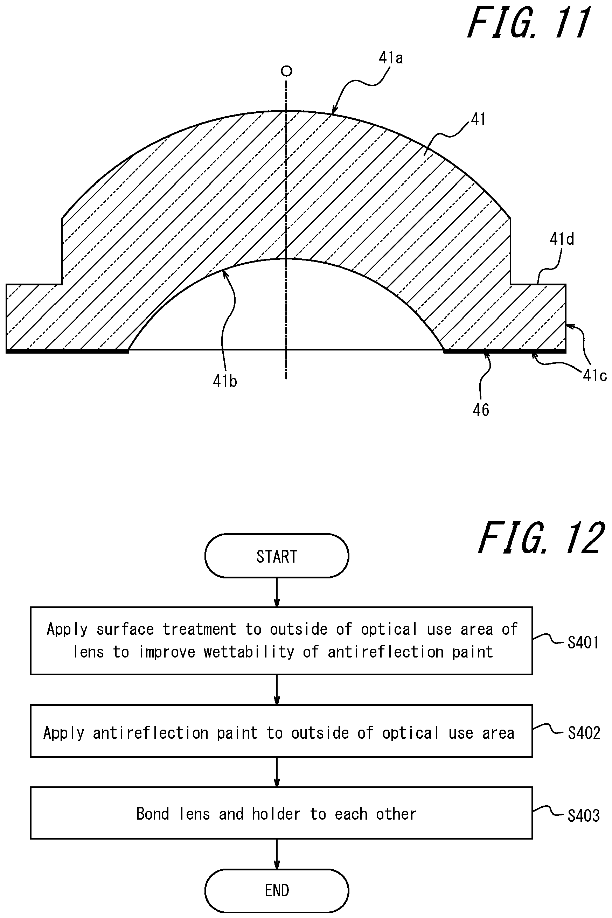

The lens 41 can be, for example, a positive meniscus lens as illustrated in FIG. 11, for example. However, the shape of the lens 41 is not limited thereto. The lens 41 has a first surface 41a on the object side including the optical use area and a second surface 41b on the image side. The lens 41 further includes an unused area 41c, which is not optically used, on the outer periphery. The unused area 41c may include a flat edge portion 41d protruding outside the outer periphery of the lens 41. At least a part of the unused area 41c is surface-treated to improve the wettability to the antireflection paint in a liquid state. The portion subjected to this surface treatment is referred to as a surface treated area 46. In the example of FIG. 11, the surface treated area 46 is a flat surface outside the second surface 41b when viewed from the optical axis O of the lens 41.

A black-painted portion to which the antireflection paint is applied is formed on the above described surface treated area 46 of the lens 41. As described above, the surface treated area 46 has good wettability to the antireflection paint in a liquid state before solidification. Therefore, the antireflection paint closely adheres to the surface treated area 46, and peeling thereof is unlikely to occur.

Next, a method of bonding the lens 41 to the lens holding ring 42 and the lens barrel 43 (holder) according to the fourth embodiment will be described with reference to FIG. 12.

First, a surface treatment that improves the wettability of the antireflection paint is applied to the surface treated area 46 outside the second surface 41b, which is a part of the optical use area of the lens 41 (step S401). The surface treatment that improves the wettability of the antireflection paint makes the contact angle between the antireflection paint in a liquid state and the surface-treated area 46 smaller than the contact angle between the antireflection paint in a liquid state and the base material of the lens 41. The contact angle between the antireflection paint in a liquid state and the surface-treated area 46 can be less than 5 degrees.

Next, the antireflection paint in a liquid state is applied to the surface treated area 46 (step S402). Since the surface treated area 46 has good wettability with respect to the antireflection paint in a liquid state, the adhesion between the antireflection paint and the surface treated area 46 increases even after the antireflection paint solidifies. In this manner, the antireflection paint layer is formed on the surface treatment layer.

After the antireflection paint dries and solidifies, the lens 41 and the holder are bonded to each other (step S403). For example, the lens 41 is fixed with its outer periphery sandwiched between the lens holding ring 42 and the lens barrel 43. In this manner, the lens 41 is positioned in the camera device 40.

As described above, in the lens 41 according to this embodiment, since the surface to which the antireflection paint is applied is subjected to surface treatment that improves the wettability to the antireflection paint in advance, the antireflection paint is hard to peel off. Furthermore, since the holding mechanism of the lens 41 and the camera device 40 incorporating this lens 41 are less likely to cause peeling off of the antireflection paint from the lens 41, good optical performance can be continuously maintained.

### [Moving body]

The camera devices 10 and 40 according to the present disclosure may be mounted on a moving body. The holding mechanisms 20 and 30 of the optical member according to the present disclosure may be provided to the camera device mounted on the moving body. The moving body in the present disclosure may include, for example, vehicles, ships, aircrafts and the like. The vehicles according to the present disclosure include automobiles, track vehicles, industrial vehicles and vehicles for life, but are not limited thereto. For example, vehicles may include airplanes running on runway. The automobiles may include, for example, passenger cars, trucks, buses, two-wheel vehicles, trolleybuses and the like, but are not limited thereto, and may include other vehicles running on roads. Track vehicles may include locomotives, freight cars, passenger cars, trams, guided track railroads, ropeways, cable cars, maglev trains, and monorails, but are not limited thereto, and may include other vehicles traveling along the track. Industrial vehicles may include, for example, agricultural and construction industrial vehicles and the like. Industrial vehicles may include, for example, forklifts, golf carts, and the like, but are not limited thereto. Agricultural industrial vehicles may include, for example, tractors, tillers, transplanters, binders, combines, lawn mowers and the like, but are not limited thereto. Construction industrial vehicles may include, for example, bulldozers, scrapers, loading shovels, crane vehicles, dump trucks, road rollers and the like, but are not limited thereto. Vehicles for life may include bicycles, wheelchairs, prams, wheelbarrows, and electric standing two-wheeled vehicles, but are not limited thereto. Vehicle power engines may include diesel engines, gasoline engines, internal combustion engines including hydrogen engines, and electric engines including motors, but are not limited thereto. Vehicles may include human-powered vehicles. Vehicle classification is not limited to the above described examples. For example, automobiles may include industrial vehicles that can travel on the road, and same vehicle may be included in some categories.

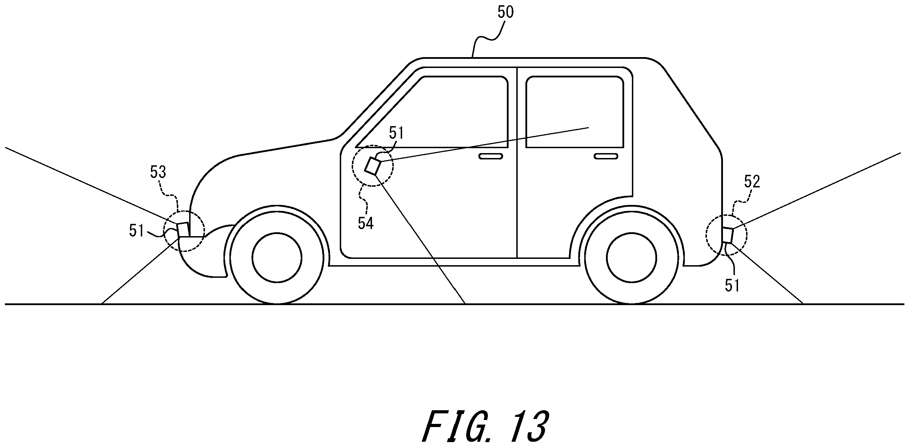

FIG. 13 illustrates the position where a camera device 51 mounted on a moving body 50, which is an automobile, is installed. The camera device 51 can be installed at any one or more positions including a vehicle rear portion 52, a vehicle front portion 53, and a vehicle side portion 54. The vehicle rear portion 52 is, for example, near a rear bumper. The vehicle front portion 53 is, for example, near a front grille and a front bumper. The vehicle side portion 54 is, for example, near a side mirror. The camera device 51 disposed at the above positions can be referred to as a rear camera, a front camera, and a side camera, respectively. The rear camera, the front camera, and the side camera can capture the rear, front, and side areas, respectively. In many cases, the camera device 51 is disposed with the optical axis tilted toward the road surface than the horizontal direction. Each of the camera devices 51 enables wide-angle shooting, and the camera devices 51 disposed at a plurality of positions may be combined to capture the entire circumference of the vehicle.

Although the present disclosure has been described on the basis of the drawings and the examples, it is to be noted that various changes and modifications may be made easily by those who are ordinarily skilled in the art on the basis of the present disclosure. Accordingly, it is to be noted that such changes and modifications are included in the scope of the present invention as defined in the claims. For example, functions and the like included in each function part can be rearranged without logical inconsistency. A plurality of function parts can be combined into one or divided.

### REFERENCE SIGNS LIST

- 10: Camera device
- 11: Lens (optical member)
- 11a: Optical use area
- 12: Holder
- 12a: Lens holding ring
- 12b: Lens barrel
- 13: O-ring
- 14: Imaging circuit
- 15: Antireflection paint
- 16: Sliding treatment area
- 20: Holding mechanism
- 21: Lens (optical member)
- 21a: Outer peripheral side
- 22: Holder
- 22a: Center
- 22b: Stepped portion
- 22c: Recess for adhesion
- 23: Adhesive
- 30: Holding mechanism
- 31: Infrared cut filter (optical member)
- 32: Holder
- 33: Adhesive
- 34: Optical use area
- 40: Camera device
- 41: Lens (optical member)
- 41a: First surface (optical use area)
- 41b: Second surface (optical use area)
- 41c: Unused area
- 42: Lens holding ring (holder)
- 43: Lens barrel (holder)
- 44: Imaging circuit
- 45: Infrared cut filter
- 46: Surface treated area
- S: Joint surface
- O: Optical axis

## Claims

1. A method of bonding an optical member (11) and a holder (12) that holds the optical member (11), comprising:
applying a surface treatment (S101) to at least a part of a surface (S) of at least one of the optical member (11) and the holder (12) to change contact characteristics of the at least the part of the surface (S) with a liquid; and
bonding the optical member (11) and the holder (12) to each other (S104) after applying the surface treatment to the at least a part of the surface (S) of the at least one of the optical member (11) and the holder (12)
wherein the method further comprises, after the applying the surface treatment:
applying (S102) an antireflection paint (15) in a liquid state to the at least the part of the surface (S); **characterized by**
slipping (S103) the antireflection paint (15) applied to a predetermined surface-treated portion of the at least the part of the surface (S);
wherein the predetermined surface-treated portion includes a sliding angle (α) of the antireflection paint (15) in a liquid state that is less than 10 degrees, so as to circle an optically used area (11a) of the optical member (11), and
wherein the optical member (11) and the holder (12) are bonded to each other with an O-ring (13) therebetween, so that the O-ring (13) comes in contact with the predetermined surface-treated portion.

2. The method of bonding according to claim 1, wherein the predetermined surface-treated portion has a width that has an error of less than 25% with respect to a width of the O-ring (13) in contact with the predetermined surface-treated portion when the optical member (11) and the holder (12) are bonded to each other.

3. An optical assembly, comprising:
an optical member (11);
an O-ring (13);
a holder (12) that holds the optical member (11); and an antireflection paint (15) applied on at least a part of a surface (S) of the at least one of the optical member (11) and the holder (12), wherein
a surface treatment layer that changes contact characteristics with a liquid is applied to at least the part of the surface (S), wherein a predetermined surface-treated portion of the at least the part of the surface (S) includes a sliding angle (α) of the antireflection paint (15) in a liquid state that is less than 10 degrees, so as to circle an optically used area (11a) of the optical member (11), and
the optical member (11) and the holder (12) are bonded to each other with the O-ring (13) therebetween, so that the O-ring (13) comes in contact with the predetermined surface-treated portion, surrounded by the antireflection paint (15).

4. A camera device (10), comprising,
the optical assembly of claim 3.

5. A moving body comprising,
the camera device (10) of claim 4.

## Patentansprüche

1. Verfahren zum Verbinden eines optischen Elements (11) und einer Halterung (12), die das optische Element (11) hält, aufweisend:
Anwenden einer Oberflächenbehandlung (S101) auf mindestens einen Teil einer Fläche (S) von mindestens einem von dem optischen Element (11) und der Halterung (12), um Kontakteigenschaften des mindestens einen Teils der Fläche (S) mit einer Flüssigkeit zu ändern, und
Verbinden des optischen Elements (11) und der Halterung (12) miteinander (S104) nach dem Anwenden der Oberflächenbehandlung auf den mindestens einen Teil der Fläche (S) des mindestens einen von dem optischen Element (11) und der Halterung (12),
wobei das Verfahren ferner nach dem Anwenden der Oberflächenbehandlung aufweist:
Aufbringen (S102) einer Antireflexionsfarbe (15) in einem Flüssigzustand auf den zumindest einen Teil der Fläche (S), **gekennzeichnet durch**
Gleitenlassen (S103) der auf einen vorbestimmten oberflächenbehandelten Abschnitt des mindestens einen Teils der Fläche (S) aufgebrachten Antireflexionsfarbe (15),
wobei der vorbestimmte oberflächenbehandelte Abschnitt einen Gleitwinkel (α) der Antireflexionsfarbe (15) in einem Flüssigzustand aufweist, der kleiner als 10 Grad ist, um einen optisch genutzten Bereich (11a) des optischen Elements (11) einzukreisen, und
wobei das optische Element (11) und die Halterung (12) mit einem O-Ring (13) dazwischen miteinander verbunden sind, so dass der O-Ring (13) mit dem vorbestimmten oberflächenbehandelten Abschnitt in Kontakt kommt.

2. Verfahren zum Verbinden gemäß Anspruch 1, wobei der vorbestimmte oberflächenbehandelte Abschnitt eine Breite hat, die einen Fehler von weniger als 25 % in Bezug auf eine Breite des O-Rings (13) in Kontakt mit dem vorbestimmten oberflächenbehandelten Abschnitt aufweist, wenn das optische Element (11) und die Halterung (12) miteinander verbunden sind.

3. Optische Baugruppe, aufweisend:
ein optisches Element (11),
einen O-Ring (13),
eine Halterung (12), die das optische Element (11) hält, und eine Antireflexionsfarbe (15), die auf mindestens einen Teil einer Fläche (S) des mindestens einen von dem optischen Element (11) und der Halterung (12) aufgebracht ist, wobei
eine Oberflächenbehandlungsschicht, die Kontakteigenschaften mit einer Flüssigkeit ändert, auf den mindestens einen Teil der Fläche (S) aufgebracht ist,
wobei ein vorbestimmter oberflächenbehandelter Abschnitt des mindestens einen Teils der Fläche (S) einen Gleitwinkel (α) der Antireflexionsfarbe (15) in einem Flüssigzustand von weniger als 10 Grad aufweist, um einen optisch genutzten Bereich (11a) des optischen Elements (11) einzukreisen, und
das optische Element (11) und die Halterung (12) mit dem O-Ring (13) dazwischen miteinander verbunden sind, so dass der O-Ring (13) mit dem vorbestimmten oberflächenbehandelten Abschnitt in Kontakt kommt, umgeben von der Antireflexionsfarbe (15).

4. Kameravorrichtung (10), aufweisend
die optische Baugruppe gemäß Anspruch 3.

5. Sich bewegender Körper, aufweisend:
die Kameravorrichtung (10) gemäß Anspruch 4.

## Revendications

1. Procédé de liaison d'un élément optique (11) et d'un support (12) qui maintient l'élément optique (11), comprenant :
l'application d'un traitement de surface (S101) sur au moins une partie d'une surface (S) d'au moins l'un de l'élément optique (11) et du support (12) pour modifier des caractéristiques de contact de ladite au moins une partie de la surface (S) avec un liquide, et
la liaison de l'élément optique (11) et du support (12) l'un à l'autre (S104) après l'application du traitement de surface sur ladite au moins une partie de la surface (S) dudit au moins un parmi l'élément optique (11) et le support (12),
dans lequel le procédé comprend en outre, après l'application du traitement de surface :
l'application (S102) d'une peinture antireflet (15) à un état liquide sur ladite au moins une partie de la surface (S), **caractérisée par**
le glissement (S103) de la peinture antireflet (15) appliquée sur une partie prédéterminée traitée en surface de ladite au moins une partie de la surface (S),
dans lequel la partie traitée en surface prédéterminée comprend un angle de glissement (α) de la peinture antireflet (15) à un état liquide qui est inférieur à 10 degrés, de manière à encercler une zone optiquement utilisée (11a) de l'élément optique (11), et
dans lequel l'élément optique (11) et le support (12) sont liés l'un à l'autre avec un joint torique (13) entre eux, de sorte que le joint torique (13) entre en contact avec la partie traitée en surface prédéterminée.

2. Procédé de liaison selon la revendication 1, dans lequel la partie traitée en surface prédéterminée a une largeur qui présente une erreur inférieure à 25 % par rapport à une largeur du joint torique (13) en contact avec la partie traitée en surface prédéterminée lorsque l'élément optique (11) et le support (12) sont liés l'un à l'autre.

3. Assemblage optique, comprenant :
un élément optique (11),
un joint torique (13),
un support (12) qui maintient l'élément optique (11), et une peinture antireflet (15) appliquée sur au moins une partie d'une surface (S) dudit au moins un de l'élément optique (11) et du support (12), dans lequel
une couche de traitement de surface qui modifie des caractéristiques de contact avec un liquide est appliquée sur au moins la partie de la surface (S),
dans lequel une partie traitée en surface prédéterminée de ladite au moins une partie de la surface (S) comprend un angle de glissement (α) de la peinture antireflet (15) à un état liquide qui est inférieur à 10 degrés, de manière à encercler une zone optiquement utilisée (11a) de l'élément optique (11), et
l'élément optique (11) et le support (12) sont liés l'un à l'autre avec le joint torique (13) entre eux, de sorte que le joint torique (13) entre en contact avec la partie traitée en surface prédéterminée, entourée de la peinture antireflet (15).

4. Dispositif de caméra (10), comprenant :
l'ensemble optique selon la revendication 3.

5. Corps en mouvement, comprenant :
le dispositif de caméra (10) selon la revendication 4.
